# EUROPEAN PATENT APPLICATION

(11) **EP 2 386 425 A2**
(43) Date of publication of application: **16.11.2011**
(21) Application number: 10196942.6
(22) Date of filing: 06.01.2006
(51) Int. Cl.: B42D 15/10, G06K 19/077

(54) **Document and method of manufacturing same**

(30) Priority: 26.09.2005 GB 0519608
(62) Divisional of application: 06700276.6
(71) Applicant: The Secretary of State for the Home Department, London SW1P 4DF (GB)
(72) Inventor: Gibson, Alan, William, London, SW1V 1PN (GB); Perry, William James, London, SW1V 1PN (GB); Davies, John, London, SW1V 1PN (GB)
(74) Representative: Cozens, Paul Dennis

(57) **Abstract**

This invention relates to a method of producing an authentication or validation document. The method includes adhering an inlay containing an RFID microchip to a page of the document. Visually legible data relating to the personal information of the bearer of the document is printed onto the page. Data constituting personal information relating to the bearer of the document is also stored on the microchip.

## Description

This invention relates to authentication or validation documents. The invention is especially concerned with improving the degree of protection given to various forms of identity documents against tampering and alteration to the visual bio data information and the removal and replacement of data storage devices embedded within the documents. Although the invention is of particular application to multipage documents, such as passports, it is according to certain aspects of more general application and may be applied to authentication or validation documents such as driving licences and identity cards.

identity documents may be used to authenticate the identity of persons for many purposes such as travel, driving privileges, access to premises, receipt of services and entitlement to benefits as well as for official duties (e.g. police warrants).

A very large number of proposals in this connection have been made, including more or less complex constructions for making printed images and handwriting tamper-proof. Now it is becoming a requirement for such documents not only to include so-called "bio data" in visual form (as words and images on a page) but also encoded in a microchip which can be read by a chip reader. This will provide additional security, confirming and possibly extending the visual data.

An object of the present invention is to provide an authentication or validation document which incorporates a page in which is embedded both a microchip for holding data in electronic form and a sheet on which data in visual form may be provided.

Accordingly a first aspect of the invention provides an authentication or validation document incorporating a page for holding data relating to the intended holder of the document, said page incorporating an inlay provided with a microchip, the chip being adapted to be encoded with data in electronic form, a sheet of material capable of being provided with data in visually legible form, and plastics layers between which the inlay and sheet are laminated so as to embed the inlay and sheet of material within said page. The page may be incorporated into a document such as a passport, and to this end may have a nominal binding line for attachment to the cover of the document. The plastics layers may extend across the binding line and serve as tabs to facilitate securing the page in place within the document.

Preferably, the page has a nominal binding line along which pages of the document are secured together, the plastics layers between which the inlay and the sheet are laminated extending across said nominal binding line of the page. Preferably, the extended portions of such layers constitute tabs. Preferably, said nominal binding line is a centre line of the page.

Preferably, the microchip is provided with an antenna laminated between said plastics layers so as to be embedded within the inlay.

Preferably, the inlay comprises a carrier embedded between plastics laminates, the microchip being supported by the carrier, at least one of the laminates being formed with a recess to receive the microchip. Preferably, the antenna is supported by said carrier, the antenna also being embedded between said plastics laminates. Preferably, each laminate comprises a plurality of bonded plastics layers.

The inlay may comprise a carrier which supports the microchip and an antenna therefor, and plastics laminates between which the carrier is embedded. One of the laminates may be provided with recesses for receiving the microchip and antenna. At least one of the laminates may have an edge which faces towards the binding line reduced in thickness, conveniently by tapering. Tapering the edge of the laminate allows the thickness of the page to be reduced in the vicinity of the spine of the document..

According to a preferred feature of the invention, at least one of the laminates is formed from a plurality of superposed plastics layers. This construction facilitates the formation of the recess which may be produced by cutting an opening in at least one of the layers, as well as the formation of the taper which may be produced by stepping down the layers at the edge. Tapering of such a multilayered page also increases the difficulty of unauthorised interference with the microchip.

Preferably, a recess is at least in part formed by a cut-out in at least one of said layers forming part of a laminate.

Preferably, the document comprises a pair of said plastics laminates, and the recessed laminate is thicker than the other laminate. Preferably, the recessed laminate is formed of more layers than the other laminate. Preferably, the recessed laminate comprises four bonded plastic layers and the other laminate comprises two bonded plastic layers.

Preferably, at least one of said laminates is tapered along one of its edges. Preferably, the document is in book form, and the tapered edge tapers towards the hinge line of the book.

Preferably, each laminate has a tapered edge formed by stepping down the width of layers constituting that laminate.

Preferably, the sheet of material for visually legible data is disposed between one of said laminates and one of the layers between which the inlay and sheet are laminated.

Preferably, said sheet of material is porous and is penetrated by adhesive on the juxtaposed surface of the adjacent layer of laminate. Preferably, the adhesive is formed by a reactive coating. -

Preferably, the document is in book form, anti said sheet of material extends beyond the hinge line of the book to constitute an unprotected page beyond that line.

Preferably, the document is in book form, and the plastic layers between which the inlay and sheet are laminated extend beyond the hinge line of the book and constitute hinge tabs.

Preferably, said plastic layers are adhered to opposite sides of the sheet of material and protect the hinge line.

According to a further aspect of the invention provides an authentication or validation document incorporating an inlay comprising a microchip supported by a carrier and embedded between plastics laminates, at least one of the laminates being formed with a recess to receive the microchip, at least one of the laminates comprising a plurality of bonded plastic layers.

Preferably, the microchip is connected to an antenna supported by said carrier, the antenna also being embedded between said plastics laminates. Preferably, the recess is at least in part formed by a cut-out in one of said layers forming part of a laminate. Preferably, the authentication or validation document comprises a pair of said plastics laminates, and the recessed laminate is thicker than the other laminate. Preferably, the recessed laminate is formed of more layers than the other laminate.

Preferably, the recessed laminate comprises more (preferably four) bonded plastic layers and the other laminate comprises fewer (preferably two) bonded plastic layers.

The sheet of material for carrying visually legible data may extend beyond the hinge line to constitute an unprotected page beyond that line. The sheet may be porous to facilitate its being bonded to the juxtaposed surface of the adjacent layer of laminate, the sheet being penetrated by adhesive on the surface of the laminate. An effective bond may be achieved by the use of reactive coatings.

According to another aspect of the invention there is provided an authentication or validation document incorporating a page for holding data relating to the intended holder of the authentication or validation document, said page incorporating an inlay provided with a microchip, the chip being adapted to be encoded with such data in electronic form, a sheet of material capable of being provided with such data in visually legible form, and a cover sheet, the sheet of material being separate from but attachable to at least one of said inlay and said cover sheet. According to a preferred feature of the invention a method of manufacturing such a document comprises covering a portion of said sheet with a reactive coating, and covering a corresponding portion of at least one of the inlay and cover sheet with a reactive coating, and applying said portion together to effect the attachment, preferably under high pressure and/or temperature.

Preferably, the respective coatings are made of different materials so that they react one with another. Preferably, said attachment is permanent.

According to a further aspect of the invention there is provided a method of producing an authentication or validation document comprising providing a microchip, attaching the chip to a carrier, overlaying the carrier and chip with a sheet of material, embedding the carrier, chip and sheet within a layer of plastics to form a page for holding data relating to the intended holder of the authentication or validation document, binding said page within an authentication or validation document, writing data electronically to the chip, and providing said sheet with visually legible data.

The invention is especially applicable to the manufacture of a passport. According to a still further aspect of the invention there is provided a passport comprising a cover and a plurality of sheets, the cover and sheets being folded along a fold line, each sheet thereby constituting a pair of leaves, one of said leaves being a data page for holding data relating to the intended holder of the document; said page incorporating an inlay provided with a microchip adapted to be encoded with such data in electronic form, a sheet of material capable of being provided with such data in visibly legible form, and plastics layers between which the inlay and sheet are laminated so as to embed the inlay and sheet of material within said page; said sheet of material for visually legible data extending beyond the fold line to form a further leaf, the plastics layers extending beyond the fold line to form tabs; end papers and a linen strip extending along the inner side of the spine of the cover; the sheets, the sheet of material for visually legible data, the tabs, end papers and linen strip being stitched together along the folded line, and the end papers being bonded to the cover.

The invention also relates to the construction of an inlay and a still further aspect provides an inlay for an authentication or validation document, comprising a microchip and two plastics sheets embedding said microchip, the microchip being attached to at least one of the plastics sheets, wherein at least a part of said inlay has a tapered edge.

The construction of a data page as explained above is such as to resist tampering and indicate that tampering has taken place, whereby it is readily evident from a quick visual inspection of the document that an attempt at alteration of visual data and/or removal or substitution of a chip, has been made.

The invention according to a still further aspect provides an authentication or validation document which is "tamper-evident" and "tamper-resistant" comprising at least one page, the page comprising in sequence from the obverse face:-
- cover layer of a transparent material;
- a data carrying layer of a damageable material;
- a substrate made of a transparent material;
- a data carrier microcircuit embedded within the substrate.

The damageable material may be paper, preferably a security grade of paper which will be visibly damaged by an attempt at deletion, or alteration of data on the paper.

The data is preferably printed on the obverse face of the paper, for example by laser (or ink jet) printing, and may include so-called bio data, that is including name, birth date and place and may include a facial image derived from a photograph or captured live from the individual.

The microcircuit is preferably a contactless microchip with an associated antenna embedded within the substrate. The microchip may carry bio-data appearing on the damageable material as confirmation of the printed material, and may in some cases include additional material such as digitised images not only of the facial image, but also for example of finger prints or an iris scan.

If the page containing the data and/or the microcircuit is to be sewn into a book, the substrate may be formed along one edge to provide a hinge for binding purposes with a projecting tab which may extend the full length of the edge. Alternatively, the hinge may be formed by a backing sheet bonded to the reverse face of the substrate, and having the appropriate edge projecting beyond the substrate to form the tab. The backing sheet, if used, should also be of transparent material.

The use of transparent materials for the cover layer and substrate, as well as the backing sheet if used, is important to enable interference or attempted tampering with the visual data on the damageable data carrying layer, or any attempt to remove or replace the microcircuit, or to damage the antenna, to be easily detected by a visual inspection.

The damageable layer, of for example a security paper such as various papers used to produce security documents, containing appropriate printed security features, would be visibly damaged by any attempt to erase printed information, quite apart from the delamination of the cover layer required to gain access to the layer. As the layers added are transparent except for the paper, most of the special security features used in such documents are visible and therefore the clarity of the covering layers will allow such items as special inks, secure printing and paper features - e.g. watermarks, to be used in such a configuration. This allows the user to build on current printed paper-security features, which have proved to be successful in countering forgeries and counterfeiting, using them in this new structure.

To give added protection to the antenna and the chip, a printed image can be used inside the substrate such that if an attempt were made to split the materials in which the antenna is embedded then damage to this image would occur indicating tampering with the document. The image can be single or multicolour, be overt or covert. An example of covert imaging would be the use of UV fluorescing inks in either short or long wave, and these inks could have differential splitting characteristics and contain variable solvency to different solvents, i.e. water and/or alcohol's.

Similarly the use of specialised tamper evident inks could be used at any of the interfaces within the structure to give added tamper evident protection.

Preferably, the antenna has unique features of visual design in shape or configuration, which are observable due to the transparency of the substrate in which the antenna is embedded.

The antenna may also be made to have unique features of visual design which would be observable due to the transparent nature of the substrate in which it is embedded, and therefore can become a security feature to assist in the protection of the document from counterfeiting.

The invention also provides a method of scrutinising a passport comprising reading data on a data page, reading data on a microchip embedded in the data page, and comparing such data with characteristics of a person seeking to exercise the privileges accorded to the holder of the passport. Advantageously data on the data page provides the reader with a key to unlock the microchip.

According to the present invention, there is also provided an authentication or validation document incorporating a data page incorporating a microchip, a pair of plastics sheets, at least one of which is recessed to receive the microchip.

Preferably, an edge of the data page is reduced in thickness.

According to the present invention, there is also provided an authentication or validation document incorporating a data page for holding data relating to the intended holder of the authentication or validation document, said page incorporating:
a sheet-like inlay provided with a microchip, the chip being adapted to be encoded with such data in electronic form; and
a sheet of material capable of being provided with such data in visually legible form,
   wherein:
the sheet and the inlay are bonded to provide said data page;
the sheet of material being dimensioned to provide a double page extending considerably beyond the inlay.

Preferably, at least a part of said inlay has a tapered edge. Preferably, the inlay comprises a plurality of bonded plastic layers, the edge of each successive layer extending beyond the previous layer to form said tapered edge. Preferably, the inlay comprises a pair of plastic laminates between which the chip is located, the chip being received in a recess in one of the laminates, a first one of said laminates comprising said plurality of bonded plastic layers, the edge of the layer most distant from the other laminate extending furthest beyond previous layer(s).

The invention extends to an authentication or validation document having a cover and incorporating a page for holding data relating to the intended holder of the authentication or validation document, said page incorporating an inlay provided with a microchip, the chip being adapted to be encoded with data in electronic form, a sheet of material capable of being provided with data in visually legible form, the page being separate from but attachable to said authentication or validation document cover.

Preferably, the chip is encased at least in part in a protective sink coating. Preferably, the chip has an upper face and a lower face, the lower face being mounted toward a chip carrier, said sink coating encasing the whole of the chip but for all or part of said upper face. Preferably, the surface of the chip which faces out of the sink coating is protected by a globe layer fitting into and being located by a lip in the sink.

According to a further aspect of the present invention there is provided an authentication or validation document incorporating a page for holding data relating to the intended holder of the authentication or validation document, said page incorporating an inlay provided with a microchip, the chip being adapted to be encoded with data in electronic form, a sheet of material capable of being provided with data in visually legible form, and a cover sheet, the sheet of material being separate from but attachable to at least one of said inlay and said cover sheet.

Preferably, at least one portion of said sheet of material is covered with a reactive coating, and a corresponding portion of at least one of said inlay and said cover sheet is covered with a reactive coating, applying said portion and said corresponding portion together to effect said attachment. Preferably, the application is effected under high pressure and/or temperature. Preferably, the respective coatings are made of different materials so that they react one with another.

Preferably, the reaction between said coatings achieves a permanent attachment.

According to the present invention, there is also provided an inlay for an authentication or validation document, comprising a microchip and two plastics sheets embedding said microchip, the microchip being attached to at least one of the plastics sheets, wherein at least a part of said inlay has a tapered edge.

Preferably, said at least one of the sheets comprises a plurality of bonded plastics layers forming a laminate. Preferably, the microchip is received in a recess at least in part formed by a cut-out in one or more of said layers forming a laminate. Preferably, at least one of said plastics sheets comprises a plurality of bonded plastics layers forming a laminate, the edge of each successive layer extending beyond the previous layer to form said tapered edge.

Preferably, the edge of the layer most distant from the other of said plastics sheets extends furthest beyond previous layer(s). Preferably, one of said plastics sheets is thicker than the other. Preferably, one of said plastics sheets is formed with a recess to receive the microchip, and said one of said plastics sheets is said thicker sheet. Preferably, the microchip has an upper face and a lower face, a sink encasing the whole of the chip but for all or part of said upper face, said thicker sheet being the sheet that opposes said upper face.

Preferably, one of the sheets comprises a plurality of bonded plastics layers forming a laminate.

Preferably, the said one of said sheets is both recessed, tapered and laminated.

Preferably, each of said sheets comprises a plurality of bonded plastics layers forming a laminate. Preferably, one of said sheets is thicker than the other of said sheets by being formed of more layers. Preferably, one of said sheets comprises at least four bonded plastics layers, and the other two layers.

Preferably, the microchip is supported by a carrier that is attached to both of said plastics sheets.

Preferably, the inlay further comprises an antenna for said microchip, the antenna also being embedded between said plastics sheets.

Preferably, the inlay further comprises a hinge tab for securing the inlay into the authentication or validation document. Preferably, the hinge tab is formed by a further plastics sheet adhered to the inlay and extending beyond an edge of the inlay. Preferably, the plastics sheets are attached one to the other.

Preferably, the microchip is attached to at least one of the plastics sheets. Preferably, at least one of the sheets is formed with a recess to receive the microchip. Preferably, the recess is at least in part formed by a cut-out in one or more of said layers forming a laminate.

Preferably, at least a part of said inlay has a tapered edge. Preferably, the same one of said sheets is both recessed, tapered and laminated. Preferably, both of said sheets comprise a plurality of bonded plastics layers forming a laminate.

In a further aspect of the present invention, there is provided a method of manufacturing an authentication or validation document incorporating a data page having a sheet of material for bearing indicia, including bonding the sheet to plastics covering layers, the sheet being porous or perforated to allow passage therethrough of adhesive.

According to the present invention, there is also provided an authentication or validation document incorporating a page for holding data relating to the intended holder of the authentication or validation document, said page incorporating an inlay provided with a microchip, the chip being adapted to be encoded with data in electronic form, a sheet of material capable of being provided with data in visually legible form, and plastics layers between which the inlay and sheet are laminated so as to embed the inlay and sheet of material within said page, wherein said page is formed along one edge to provide a hinge for binding purposes, with a projecting tab which extends the full length of the edge and is formed from said plastics layers between which the inlay and sheet are laminated.

Preferably, the tab is formed only from said plastics layers. Preferably, the page has a nominal binding line along which pages of the document are secured together, the plastics layers between which the inlay and the sheet are laminated each extending across said nominal binding line of the page. Preferably, said nominal binding line is a centre line of the page.

Preferably, in the region of said projecting tab said plastics layers are affixed to respective sides of said sheet of material.

Preferably, said sheet of material additionally constitutes a further page in said authentication or validation document. Preferably, said further page is not laminated except in the region of the tab.

Preferably, the page has a nominal binding line intended for the attachment to a cover of the authentication or validation document, the plastics layers between which the inlay and the sheet are laminated each extending across said nominal binding line of the page.

Preferably, said nominal binding line is a centre line of the page.

The invention extends to an inlay for an authentication or validation document, comprising a microchip and two plastics sheets embedding said microchip, the microchip being attached to at least one of the two plastics sheets, wherein the microchip is provided in a recess in one of the plastics sheets.

The invention further extends to an authentication or validation document incorporating an inlay as aforesaid.

Preferably, the inlay is adhered to a page of the document. Preferably, the page is provided with visually legible data relating to a bearer of the document.

In a yet further aspect of the present invention, there is provided a method of producing an authentication or validation document comprising providing a microchip, attaching the chip to a carrier, overlaying the carrier and chip with a sheet of material, embedding the carrier, chip and sheet within a layer of plastics to form a page for holding data relating to the intended holder of the authentication or validation document, binding said page within an authentication or validation document, writing data electronically to the chip, and providing said sheet with visually legible data.

Preferably, the method comprises the steps of:
embedding the chip within a plastics inlay comprising a plurality of constituent layers, the method including the step of providing a recess within at least one of said layers, the recess dimensioned and shaped for accommodation of the chip, and locating the chip within said recess; and
   bonding said layers together with the carrier and chip to embed the chip within the inlay.

Preferably, at least one of the constituent layers is fully perforated to accommodate the body of chip, and a further one of the constituent layers is provided with a recess or depression to accommodate a face of the chip.

Preferably, the method comprises the steps of:
embedding the chip within a plastics inlay comprising a plurality of constituent layers, the method including the step of providing a recess within at least one of said layers, the recess sized and shaped for accommodation of the chip, and locating the chip within said recess; and bonding said layers together with the carrier and chip to embed the chip within the inlay.

According to a further aspect of the present invention, there is provided a method of producing an authentication or validation document comprising:
forming a contactless chip microchip;
disposing the chip on a carrier;
embedding the chip and carrier in a plastics inlay;
bonding the plastics inlay to a sheet of material to provide a data page;
writing data electronically to the chip;
providing visually legible data to the data page;
applying a laminar film covering to at least a part of the data page and the inlay; and
binding the data page into authentication or validation document by binding means interacting with at least one of the plastics inlay, the sheet of material, and the laminar surface covering.

Preferably, the binding means comprises stitching, the step of binding the data page comprising stitching at least one of the plastics inlay, the sheet of material, the laminar surface covering and end papers, and adhering the end papers to a cover.

Preferably, the step of binding the data page further comprises adhering a part of the page to the cover of the authentication or validation document. Preferably, the method includes the step of forming an antenna in communication with the chip, disposing the antenna on the carrier, and embedding the antenna with the chip and carrier in the plastics inlay.

Preferably, the authentication or validation document has a page size for each page contained therein, the plastics inlay, the sheet of material and the laminar film having a surface area larger than said authentication or validation document page size and the stitching passing through at least one of the plastics inlay, the sheet of material and the laminar film. Preferably, the plastics inlay comprises two laminates between which the chip and carrier are sandwiched and embedded, a first laminate having a surface area no larger than said authentication or validation document page size, the second laminate having a surface area larger than said authentication or validation document page size to provide an extending tab along one edge of the plastics inlay, such that the binding means interacts with said tab of said second laminate.

Preferably, the binding means comprises stitching, the step of binding the data page comprising stitching at least one of the plastics inlay, the sheet of material, and the laminar surface covering to a cover of the authentication or validation document along an authentication or validation document spine line.

According to the present invention, there is further provided a method of scrutinising an authentication or validation document comprising reading data on a data page, reading data on a microchip embedded in the data page, and comparing such data with characteristics of a person seeking to exercise the privileges accorded to the holder of the authentication or validation document.

Preferably, data on the data page provides the reader with a key to unlock the microchip.

According to the present invention, there is further provided a passport comprising a cover and a plurality of sheets, the cover and sheets being folded along a fold line, each sheet thereby constituting a pair of leaves, one of said leaves being a data page for holding data relating to the intended holder of the document; said page incorporating an inlay provided with a microchip adapted to be encoded with such data in electronic form, a sheet of material capable of being provided with such data in visibly legible form, and plastics layers between which the inlay and sheet are laminated so as to embed the inlay and sheet of material within said page; said sheet of material for visually legible data extending beyond the fold line to form a further leaf, the plastics layers extending beyond the fold line to form tabs; end papers, and a linen strip extending along the inner side of the spine of the cover; the sheets, the sheet of material for visually legible data, the tabs, end papers and linen strip being stitched together along the folded line, and the end papers being bonded to the cover.

Preferably, the edge of the inlay facing the fold line is tapered. Preferably, a method of manufacturing such passports includes the steps of manufacturing the passports in interconnected pairs and severing the passports one from another.

Preferably, prior to stitching, spot welds are applied to selected components of the passport to hold them together.

The invention extends to a method of producing an authentication or validation document, which comprises adhering an inlay containing an RFID microchip to a page of the document.

Preferably, visually legible data is printed onto the page, the data constituting personal information relating to the bearer of the document.

Preferably, the inlay is adhered to the page after printing onto the page. Preferably, the inlay is adhered to the underside of the surface onto which the page is printed.

Preferably, data constituting personal information relating to the bearer of the document is stored on the microchip. Preferably, at least some of (preferably substantially all) the information that is stored on the microchip is also printed onto the page. Alternatively, exactly the same information that is stored on the microchip is also printed on the page.

Preferably, additional information that is not printed onto the page is stored on the chip.

Preferably, a reactive coating is provided on the surface of the inlay which enables the inlay to be adhered to the page in a subsequent processing step.

Preferably, the inlay is secured to the document along an edge thereof prior to being adhered to substantially the entire surface of the page. Preferably, the inlay is secured to the document along an edge of the page adjacent to a nominal binding line of the document.

Preferably, the inlay is secured to the document via a hinge tab provided along an edge thereof. Preferably, the page extends past a nominal binding line of the document thereby forming a further page on the other side of the binding line, and wherein the hinge tab is secured to this further page.

Preferably, a protective layer is adhered to a surface of the page onto which visual data is printed. Preferably, the protective layer is secured to the document along an edge thereof prior to adhering the protective layer to substantially the entire surface of the page. Preferably, the protective layer is secured to the document along an edge of the page adjacent to a nominal binding line of the document. Preferably, the protective layer is secured to the document via a hinge tab provided along an edge thereof. Preferably, the page extends past a nominal binding line of the document thereby forming a further page on the other side of the binding line, and the hinge tab is secured to this further page.

Preferably, the protective layer and the inlay are both adhered to the page during the same adhering step. Preferably, the adhering step comprises laminating the inlay and the protective layer to the page.

According to a further aspect of the invention, there is provided a page for an authentication of validation document, the page comprising the same data regarding authentication or validation in both electronic form and visible form.

Preferably, additional data is provided in electronic form. Preferably, the page comprises an RFID microchip and wherein the data is provided in electronic form on the microchip. Preferably, the data comprises personal information.

Preferably, the page comprises an inlay as aforesaid.

The invention extends to an authentication or validation document, which comprises a page as aforesaid.

The invention also extends to the following, substantially as herein described and/or illustrated:
- An authentication or validation document
- An inlay for an authentication or validation document
- A page of an authentication or validation document
- A method of manufacturing an authentication or validation document
- A method of producing an authentication or validation document
- A method of scrutinising an authentication or validation document
- A passport

The invention extends to an authentication or validation document incorporating a page for holding data relating to the intended holder of the passport, said page incorporating an inlay provided with a microchip, the chip being adapted to be encoded with such data in electronic form, a sheet of material capable of being provided with such data in visually legible form, and plastics layers between which the inlay and sheet are laminated so as to embed the inlay and sheet of material within said page.

Preferably, the page has a nominal binding line intended for the attachment to a cover of the passport, the plastics layers between which the inlay and the sheet are laminated extending across said nominal binding line of the page.

Preferably, at least part of said inlay also extends across said nominal binding line of the page. Preferably, said nominal binding line is a centre line of the page.

Preferably, the microchip is provided with an antenna, the antenna also being laminated between said plastics layers to be embedded within the inlay.

The invention also extends to an authentication or validation document incorporating an inlay comprising a microchip supported by a carrier and embedded between plastics laminates, at least one of the laminates being formed with a recess to receive the microchip.

Preferably, the microchip is in connection with an antenna supported by said carrier, the antenna also being embedded between said plastics laminates, at least one of the laminates being formed with a recess to receive the antenna.

Preferably, each laminate is comprised of a plurality of bonded plastic layers. Preferably, the recess is at least in part formed by a cut-out in one of said layers forming part of a laminate.

Preferably, the authentication or validation document comprises a pair of said plastics laminates, and the recessed laminate is thicker than the other laminate.

Preferably, the recessed laminate is formed of more layers than the other laminate. Preferably, the recessed laminate comprises four bonded plastic layers and the other laminate comprises two bonded plastic layers.

The invention further extends to an authentication or validation document incorporating a data page incorporating a microchip, a pair of laminates, at least one of which is recessed to receive the microchip, one of the laminates being formed with an edge tab for attaching the data page to the body of the authentication or validation document.

Preferably, the data page further incorporates an antenna in connection with the microchip, at least one of said pair of laminates being recessed to receive the antenna.

The invention extends to an authentication or validation document incorporating a data page for holding data relating to the intended holder of the authentication or validation document, said page incorporating:
a sheet-like inlay provided with a microchip, the chip being adapted to be encoded with such data in electronic form; and
a sheet of material capable of being provided with such data in visually legible form,
   wherein:
the sheet and the inlay are bonded to provide said data page;
the sheet of material sized to provide a double page in the authentication or validation document, extending considerably beyond the size of the inlay;
at least some of the visually legible data and the inlay being provided on a single page of the authentication or validation document, and a further page being comprised in said sheet of material.

Preferably, the inlay comprising a plurality of bonded plastic layers, the edge of each successive layers extending beyond the previous layer to form said tapered edge.

The invention further extends to an authentication or validation document having a cover and incorporating a page for holding data relating to the intended holder of the authentication or validation document, said page incorporating an inlay provided with a microchip, the chip being adapted to be encoded with such data in electronic form, a sheet of material capable of being provided with such data in visually legible form, the page being separate from but attachable to said authentication or validation document cover.

Preferably, the chip has an upper face and a lower face, the lower face mounted toward a chip carrier, said sink coating encasing the whole of the chip but for all or part of said upper face.

Further features of the invention are characterised by the appended claims.

The invention extends to methods and/or apparatus substantially as herein described with reference to the accompanying drawings.

Still further aspects of the invention will appear from the description or preferred embodiments and the claims which follow.

Apparatus and method features may be interchanged as appropriate, and may be provided independently one of another. Any feature in one aspect of the invention may be applied to other aspects of the invention, in any appropriate combination. In particular, method aspects may be applied to apparatus aspects, and vice versa.

The invention is now described, purely by way of example, with reference to the following diagrammatic drawings, in which:-
Figure 1 illustrates diagrammatically the system architecture of a passport in accordance with an aspect of the invention,
Figure 2 illustrates the configurations of the logical data structure (LDS) application for the passport,
Figure 3 illustrates a first configuration of the LDS application, with open access,
Figure 4 illustrates a second configuration of the LDS application, with basic access control,
Figure 5 is a flow diagram to illustrate the steps of creating a passport and its scrutinisation,
Figure 6 shows a two-up inlay into which a pair of carrier sheets (each incorporating a microchip and an antenna) have been embedded, and which may be subdivided during the manufacture of two passports,
Figure 7 is a diagrammatic cross-section through the components of a data page of a passport in accordance with an aspect of the invention,
Figure 7A is a view similar to Figure 7 but showing an alternative laminate construction,
Figure 7B is a perspective view of the components of the inlay shown in Figure 7,
Figure 8 is a cross-section through a passport incorporating a data page in accordance with an aspect of the invention,
Figure 9 is a cross-section through a data page in accordance with another aspect of the invention,
Figure 10 is an exploded view of the passport as shown in Figure 8,
Figure 11 is a perspective view of the passport as shown in Figure 10,
Figure 12 is a block diagram illustrating the manufacture of a passport, and
Figure 13 is a further block diagram illustrating further steps in the manufacture of a passport.

Aspects of the invention will now be described as applied to passports. The present European Union passport as issued in the United Kingdom, for example is a highly secure Machine Readable Travel Document (MRTD). Information relating to the holder is provided on a machine-readable data page which, in the case of the UK passport, is provided either on the inner surface of the last page, or on the inner surface of the back cover.

The present recommendations of the International Civil Aviation Organisation (ICAO) are contained in the 6^{th} Edition of Doc 9303, the 7^{th} draft of which is dated 21 May 2005, to which reference should be made for a better understanding of the various aspects of the invention. In accordance with these recommendations, passports will in addition contain a contactless microprocessor chip that stores the personal data of the passport holder in a digital format. The physical MRTD will be enhanced by a Logical Data Structure (LDS or logical MRTD) and corresponding security features based on cryptography.

A passport as contemplated by this aspect of the invention incorporates an inlay laminated to the back of a data page which is preferably a page separate from (but attachable to) the cover of the passport. In one embodiment, the data page is provided on the inner surface of the last page. In other embodiments, the data page is provided on the outer surface of the first page, or on any other page of the passport; the passport may have a plurality or multiplicity of pages. The inlay incorporates a radio frequency identification (RFID) chip and its associated antenna in a construction that is suitable for binding into the passport book in compliance with the ICAO requirements. The inlay is formed from plastics material and may incorporate a binding strip to allow the inlay to be sewn into the passport. In an embodiment, the binding strip is formed by a further laminate sheet which is bonded to the inlay. This sheet is then sealed to a leaf which forms the bio data page on one side of the passport and a declaration page on the other side of the passport. The binding strip thereby forms a protective hinge around the rear of the leaf. Conveniently during manufacture, the surface of the inlay is coated with a heat-activated adhesive to enable it to be laminated during assembly to the bio data page of the passport at a sealing temperature that is sufficiently high that proper adhesion occurs but sufficiently low to prevent damage to other components.

The inlay incorporates a contactless chip module, and an antenna formed from embedded copper, silver, silver alloy or gold wire, or which could be silkscreen printed using the same or similar materials. The chip module has a high-security microprocessor with cryptographic capabilities and security functions capable of protecting the chip against attackers with a contactless communication interface. Embedded software provides an operating system compatible with ISO 7816 and with addition specific functions in read only memory (ROM). The logical data structure (LDS) application containing the application and user data is a logical file structure stored in the electrically erasable programmable memory (EEPROM) of the chip.

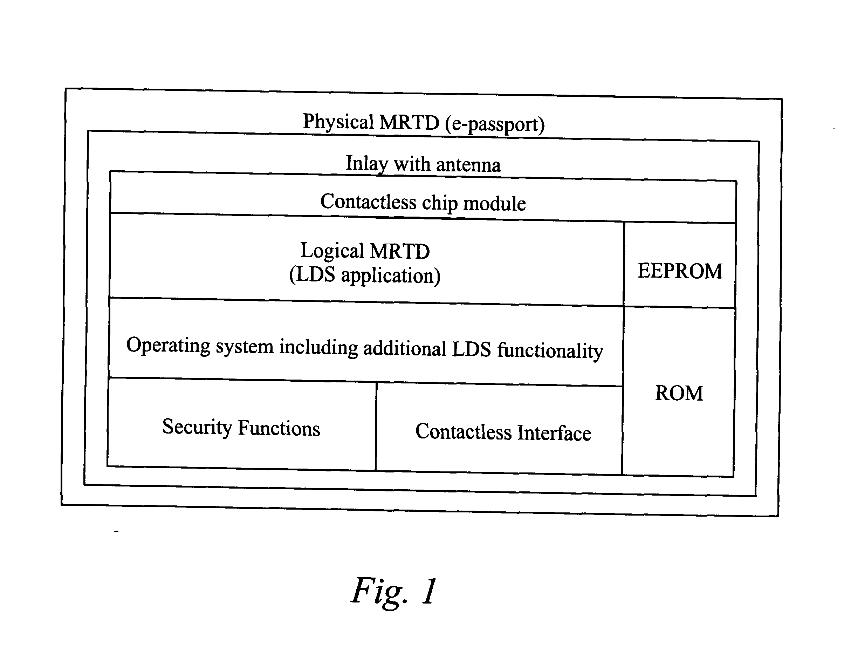

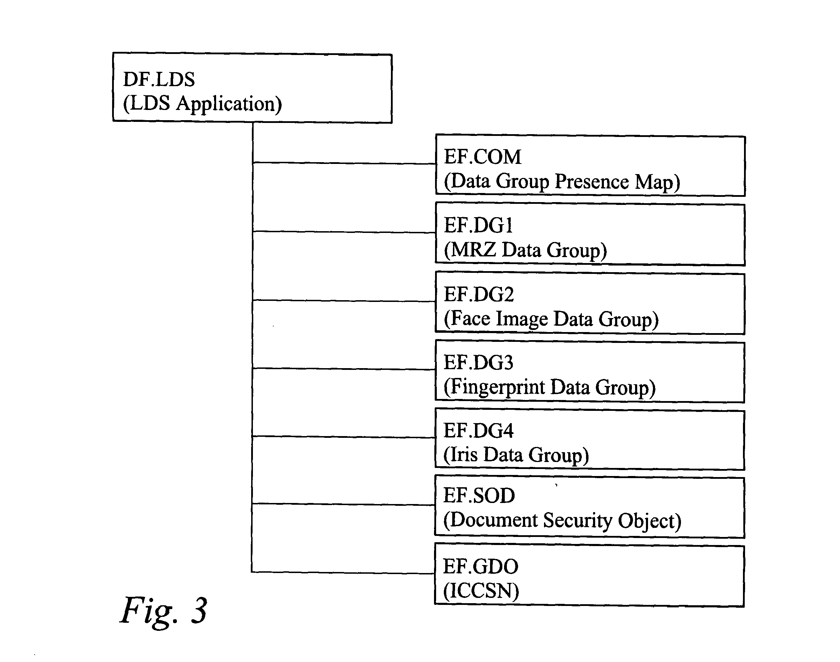

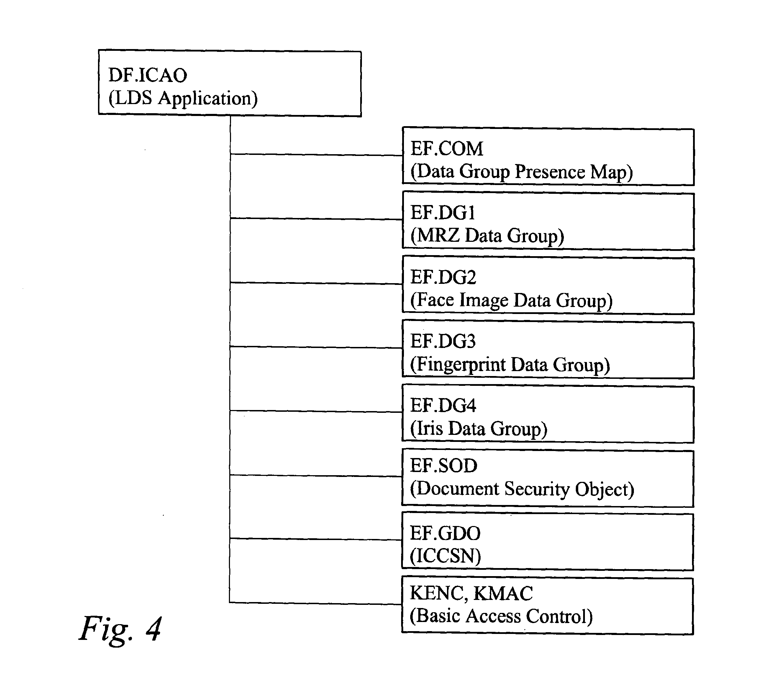

Reference is now made to Figure 1 which illustrates the architecture of a passport according to this aspect of the invention. The operating system of the chip integrated into a passport in accordance with this aspect of the invention manages the LDS application that contains the logical MRTD. The logical MRTD contains personal data of the passport's bearer. Conveniently the passport includes a machine readable zone (EF.DG1) and a digital face image (EF.DG2) of the bearer on the bio data page. Variants may store fingerprint data (comprising multiple fingerprints) in a further machine readable zone (EF.DG3) and iris data in further machine readable zone (EF.DG4), as shown in Figures 3 and 4. The chip supports both basic access control (BAC) as well as extended access control (EAC). BAC provides a certain level of security and EAC provides enhanced security. Thus, it is possible for certain readers to access only certain data stored on the chip using BAC and for other readers to access further or all data stored on the chip using EAC, for example, fingerprints and/or iris scans may only be accessed by certain readers using EAC.

In use, the passport is personalised optically and then electronically by the appropriate authority and issued to the holder for use. The identity of the holder can be verified using an inspection system adapted to read the contents of the logical data structure.

Advantageously the EEPROM has at least 32k of free space for the LDS application data and has a data retention time of at least 12 years, and the inlay will maintain structural integrity for at least this period, allowing the chip and passport to be functional for the intended validity period of the passport. The chip provides a contactless interface as specified in ISO14443-1 (covering physical characteristics) and ISO14443-2 (covering the signal interface). The contactless chip also supports at least a Type A or Type B communication protocol (as described in ISO14443).

The communication interface of the chip supports at least the higher bit rates as defined in ISO14443-2A, i.e. 212 kbit/sec and 424 kbit/sec., and preferably at least 847 kbit/sec.

The chip is adapted to return the same unique identifier (UID) as part of the ISO 14443 protocol throughout the passport production process while the chip is in its initialisation state, and resists electrostatic discharge (ESD) according to the test methods defined in ISO10373-6 (human body model).

The chip is adapted to comply with the physical and electrical specifications as defined in ISO14443-1, i.e. X-rays, UV light, alternating magnetic and electric fields, static electricity, and static magnetic fields, as verified according to the test methods defined in ISO10373-1. The chip is adapted to operate as intended continuously between 1.5 A/m rms and 7.5 A/m rms and with an operating field frequency of 13,56 MHz ±7 kHz as defined by ISO14443-2. The chip is moreover adapted to operate at an ambient temperature ranging from -35°C up to 85°C, and humidity ranging from 0% to 95%, so that it can withstand the temperatures and humidities which may be encountered in use, as well as the temperatures encountered and created during manufacture of the inlay and during the passport production process. Likewise the chip is adapted to withstand the pressures applied during these processes. The radio frequency identification (RFID) chip and antenna are also able to withstand the maximum power specified in ISO 14443.

The chip is protected from physical tampering as described hereinafter and incorporates an embedded operating system which resists "state-of-the-art" attacks from a hacker attempting to physically modify the chip, manipulate the data stored inside, and reconstruct/disclose the operating system software or cryptographic keys and provides countermeasures at least against:
- Power analysis SPA, DPA, and other variants
- Timing attacks
- Differential fault analysis
- Microprobing
- Manipulation of the chip using focussed ion beams, microwaves or UV light
- Induced malfunctions by exposing the chip to extreme temperatures or voltages or to voltage spikes
- Single step modes of the external frequency
- Dissolution of protection shields or layers

The antenna is adapted to give optimum response when incorporated into the passport and read by readers operating at 13.56 MHz.

The operating system, its file system, and its command set are adapted to comply with ISO7816-4, ISO7816-8, and ISO7816-9. The command set is defined in ICAOLDS and comprises at least the following ISO commands:
SELECT FILE by AID (application identifier)
SELECT FILE by FID (file identifier)
READ BINARY (Commands B0 and B1)
GET CHALLENGE
MUTUAL AUTHENTICATE

The operating system provides a command set used for personalising the LDS application and supports at least the following ISO commands:
SELECT FILE by AID
SELECT FILE by FID
ACTIVATE FILE
UPDATE BINARY
GET CHALLENGE
MUTUAL AUTHENTICATE

The SELECT FILE command returns the FCP (file control parameter) according to ISO. At least the BER-TLV (basic encoding rules/tag length value) parameters indicated in Table 1 must be returned.

**TABLE 1**

| **Tag** | **Value** |
|---|---|
| '80' | Number of Data Bytes in the file, excluding structural information |
| '82' | File descriptor byte (data coding byte, maximum record size, number of records) |
| '83' | File Identifier |
| '84' | DF name (AID), application only |
| '88' | Short EF Identifier |
| '8A' | Life Cycle Status (LCS) Byte |
| '8B' | Security Attribute referencing the expanded format, optional |
| '8C' | Security Attribute referencing the compact format, optional |

The operating system is adapted to support a selection of files by SFI (short file identifier). If a file is implicitly selected by SFI, the operating system points to the newly selected file for the subsequent commands. The operating system provides the mutual authentication functionality with session key agreement that is used in Basic Access Control as defined in ICAOPKI, and also supports Secure Messaging as used in Basic Access Control and the further security features as defined in ICAOPKI. The functionality of Active Authentication and Extended Access Control and support for RSA, DSA and ECDSA algorithms are also provided for. In practice, the operating system is in the initialised state when it is delivered to the inlay manufacturer. In order to protect the initialised chip from misuse, the operating system is locked using a strong cryptographic mechanism. At least triple data encryption standard (DES3) based strong authentication is applied.

The operating system is adapted to support the contactless interface according to ISO14443-3 concerning the initialisation and anti-collision handling and according to ISO14443-2 concerning the transmission protocol T=CL and at least one of the communication protocols type A and type B. The chip operating system also supports at least the higher bit rates as defined in ISO14443-3A and ISO14443-4A, i.e. 212 kbit/sec and 424 kbit/sec, and preferably 847 kbit/sec. The operating system is also adapted to support file transfers of greater than 32k bytes.

In the event that the LDS application is not pre-installed, the operating system provides a command set for installing the LDS application, and supports at least the following ISO commands:
INTERNAL AUTHENTICATE
EXTERNAL AUTHENTICATE
INITIALISE UPDATE
INSTALL
LOAD

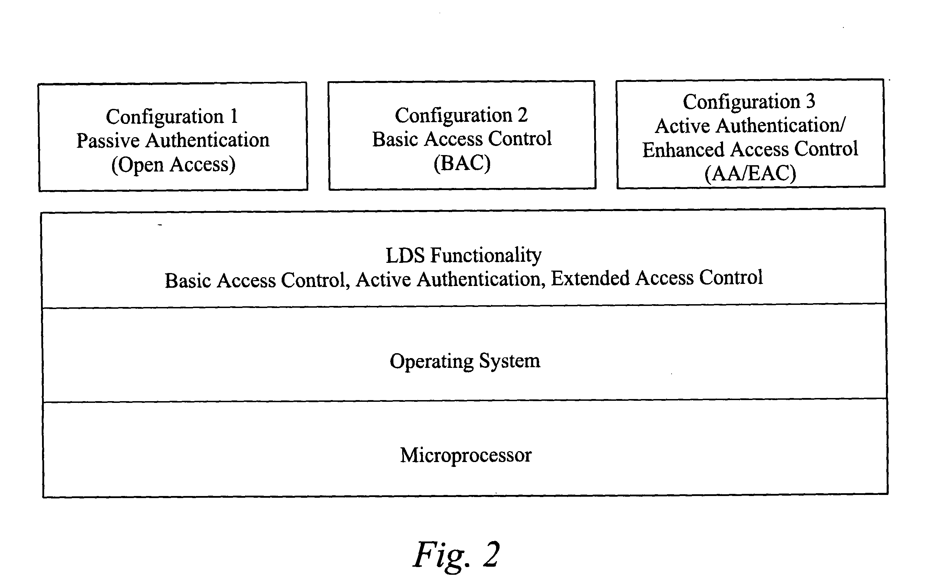

The LDS application in the chip of the passport conforms to the recommendations ICAOLDS and ICAOPKI of the ICAO. The chip operating system manages the LDS application containing the logical MRTD. The EEPROM of the chip may be initialised with two different configurations of the LDS application as shown in Figure 2, these configurations being alterable for future variants of the LDS application without redesigning the operating system and re-certifying the operating system or chip. Provision is made for the following application configurations:
Configuration 1 provides open access control (passive authentication). The logical MRTD can be retrieved from the chip without authentication. This configuration contains the elementary files as shown in Figure 3.
Configuration 2 is based on Basic Access Control. The logical MRTD can be retrieved from the chip after authentication. Secure messaging is applied to the subsequent communication.

This configuration contains the elementary files as shown in Figure 4.

The only difference between the two configurations is an additional key object containing the authentication keys Kenc and Kmac derived from the machine readable zone (MRZ).

Configuration 3 is based on Enhanced Access Control which provides an enhanced level of security.

In the BAC (or EAC) configuration it is first necessary to scan the MRZ of the passport in order to obtain a code to access the RFID chip. Alternatively, it is possible to enter information corresponding to the MRZ into a reader thereby to obtain the code to access the RFID chip.

The contents of all application-specific elementary files are reset to a logical zero at initialisation time, the chip being in the Initialised state when it is delivered to the inlay manufacturer.

The elementary file EF.COM contains the data group presence map, encoded according to Table 2. In this and other tables, FID refers to the file identifier, SFI refers to the short file identifier, and BAC refers to the basic access control.

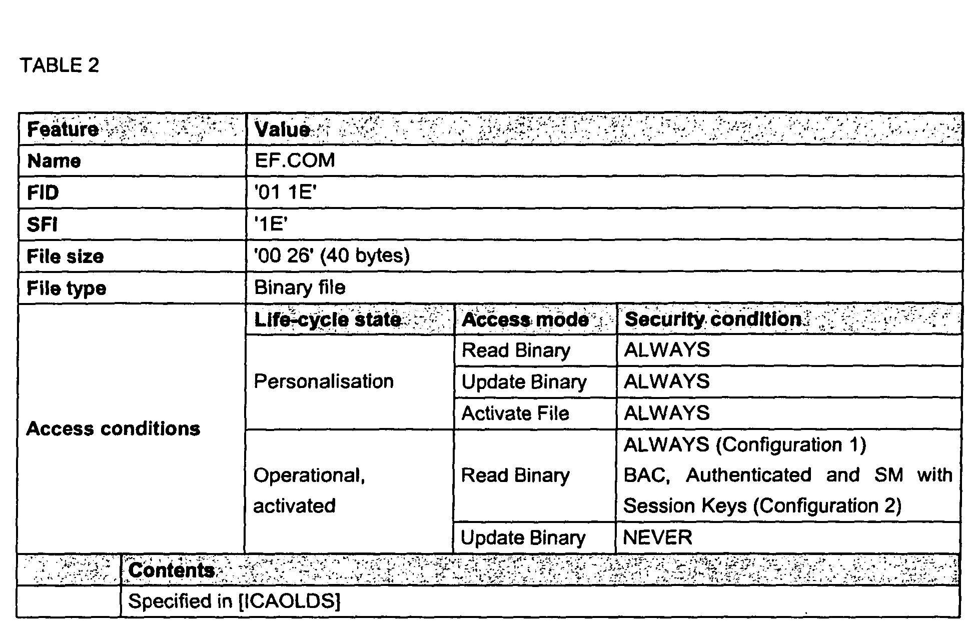

The elementary file EF.DG1 contains the MRZ data group encoded according to the Table 3.

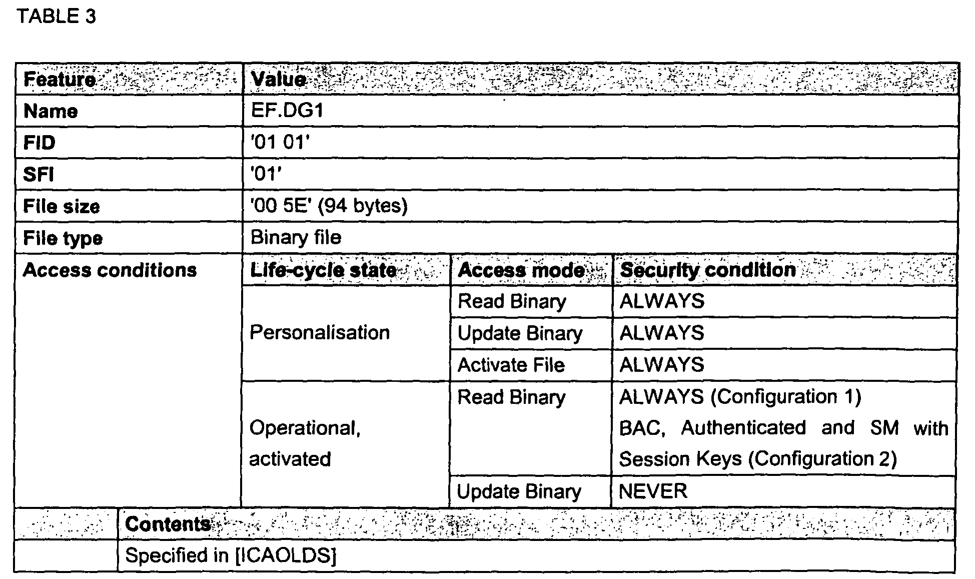

The elementary file EF.DG2 contains the face image data group, encoded according to Table 4.

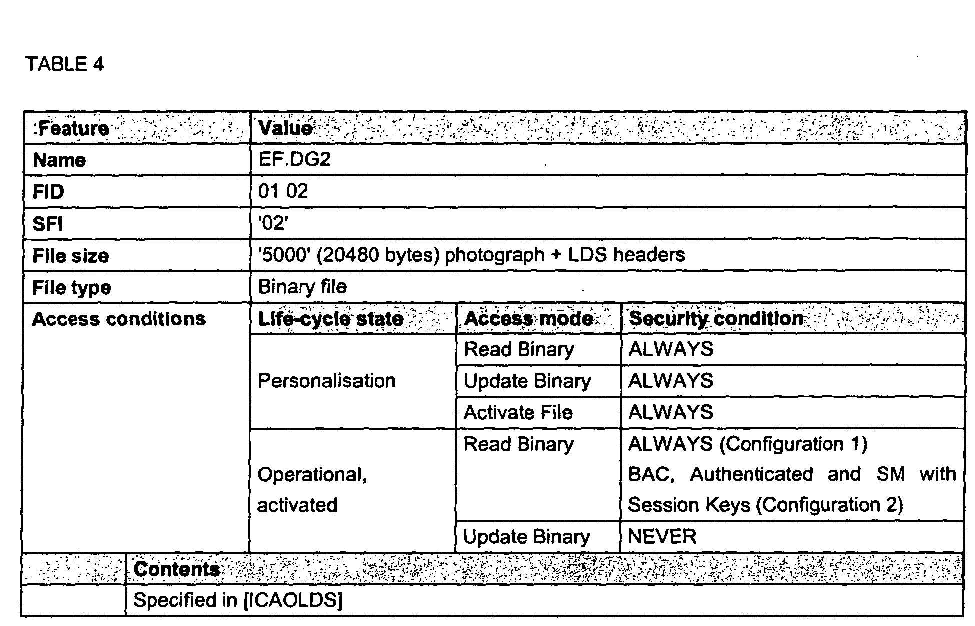

The elementary file EF.SOD contains the security data object, encoded according to Table 5.

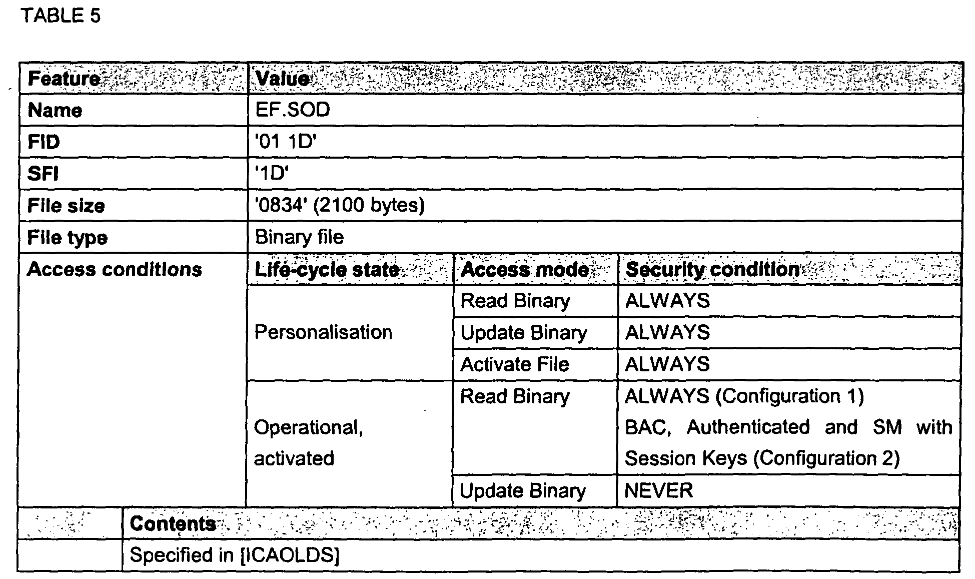

The elementary file EF.GDO contains the unique serial number of the RFID chip, encoded according to Table 6. In the table, ICCSN refers to the serial number of the passport in electronic form.

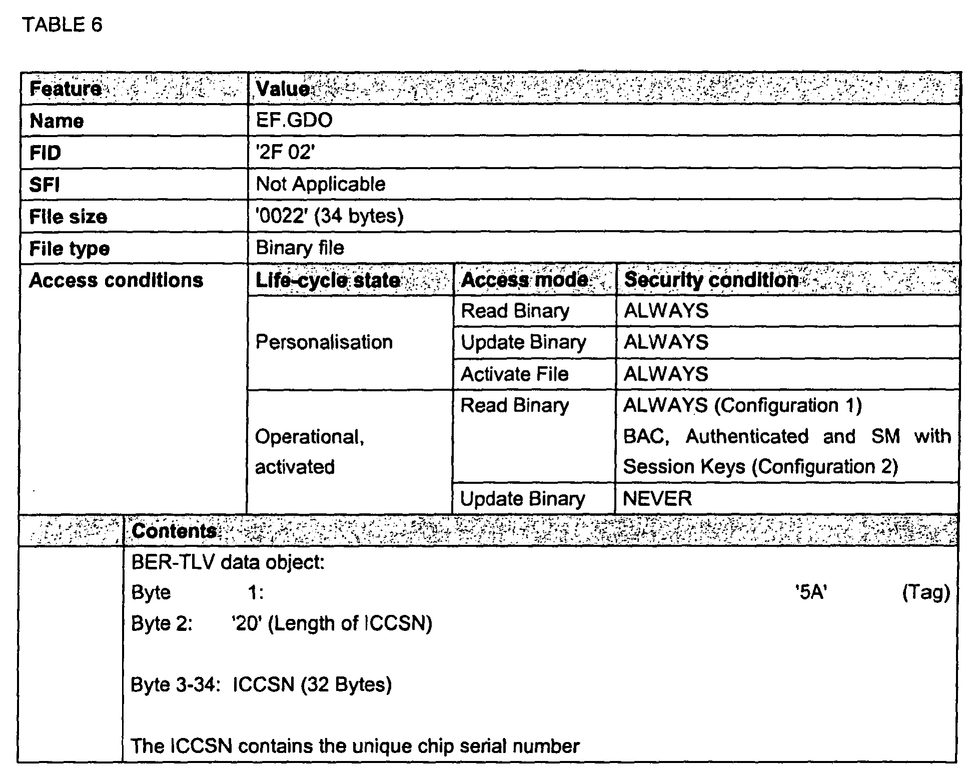

For centralised personalisation the operating system provides three different chip life-cycles.

Initialisation state: The chip is initialised with a completed operating system and with one of the application configurations loaded into EEPROM. It is locked by means of strong authentication. The personalisation key KPers is already loaded into the EEPROM. The personalisation commands cannot be used.

Personalisation state: After mutual authentication of the chip and the personalisation system the chip enters a temporary personalisation state, i.e. if the session is reset this status must be regained by mutual authentication. The personalisation key KPers is applied to this authentication procedure. The command set for personalisation is active.

Usage state: The final personalisation command terminates the personalisation phase. The personalisation commands are no longer valid but the application command set is activated. The file system is in its operational state.

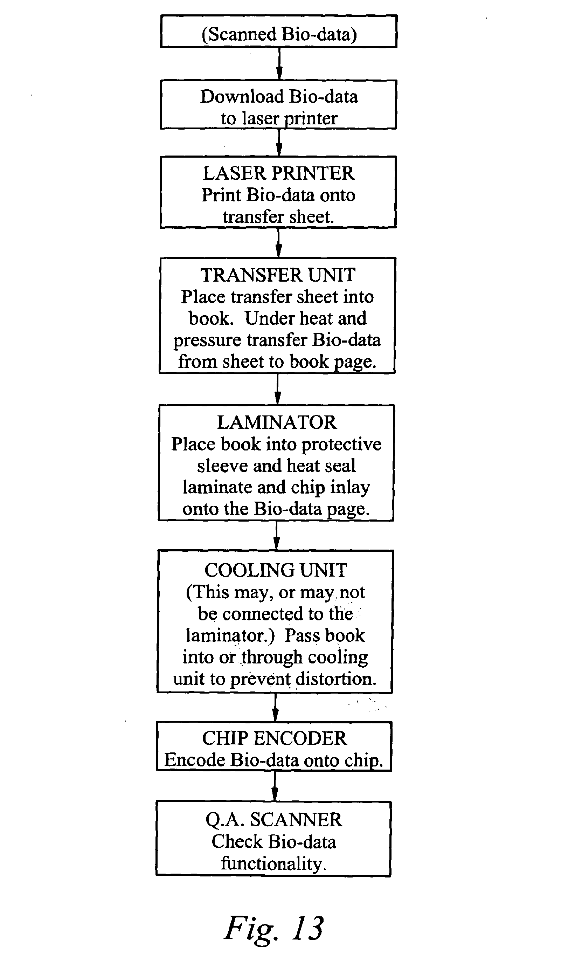

The chip that is delivered to the inlay manufacturer is in an initialised state. The personalisation key is a secret cryptographic key capable of being delivered in a secure and certifiable way, a secure mechanism being provided to transfer the personalisation key (KPers). In an initialised state, the chip only provides a command subset to authenticate the personalisation system and unlock the chip. The personalisation command set comprises a function to terminate the personalisation phase. Having executed this command, the chip will be in its usage state. This change of the card life-cycle is irreversible. The application cannot be re-personalised. In order to activate the elementary files and their corresponding security attributes, the personalisation command set comprises the ACTIVATE FILE command according to ISO7816-9. After unlocking the chip, it becomes possible to personalise the EFs of the application without restrictions. The operating system provides a command to personalise the cryptographic machine readable zone (MRZ) keys. This personalisation command may be an UPDATE RECORD or UPDATE BINARY according to ISO7816-4. After mutual authentication, the operating system returns the unique serial number of the chip. This piece of information may be used to generate an ICCSN to be stored in the application's file EF.GDO. Figure 13 illustrates the steps taken in encoding the chip.

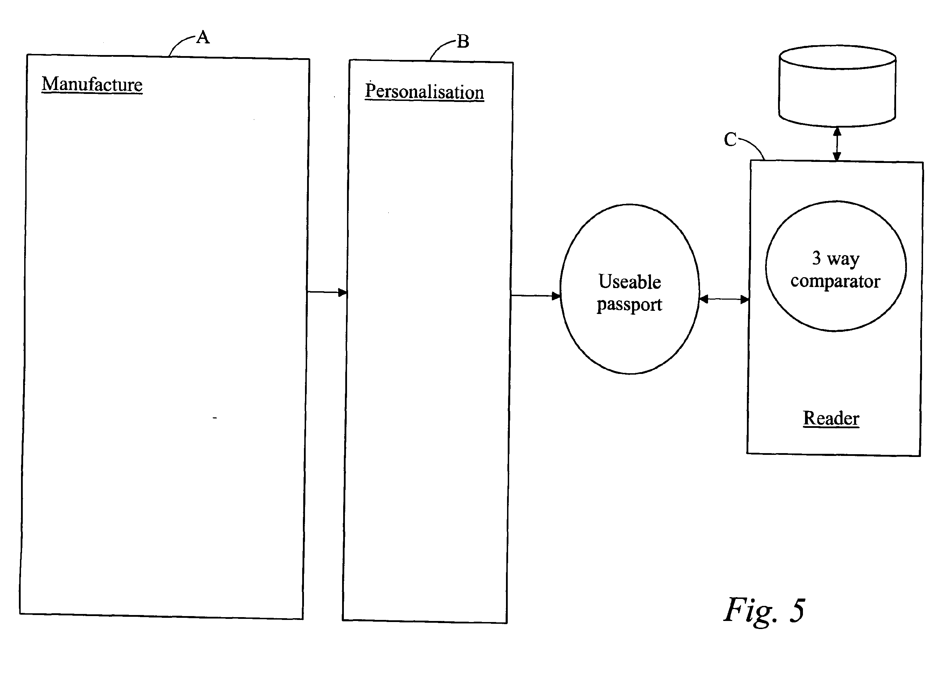

Figure 5 depicts an overview of the production and use of a passport.

Generally, during manufacture and personalisation (as indicated at A and B in Figure 5), a passport is produced having information relating to the user provided in legible form and having the same or similar information encoded onto a chip which forms part of the passport. The passport may then be issued to the intended holder.

In use, as indicated at C, the passport may be subjected to a three-way comparison. The data page may be swiped or scanned optically by a reader to read the information contained within the machine readable zone (MRZ) of the data page, or alternatively it is possible for an operator to enter certain information contained within the MRZ directly into the reader via, for example, a keyboard. Either of these processes will generate a code to unlock the chip and allow the data stored on the chip to be read by an electronic reader. Verification of the holder may then take place by comparing the bio data stored in the chip with the information printed in the passport and by scanning and/or inspecting the holder and comparing the result of this scan or inspection with the data printed on the passport or stored on the chip.

Details of the manufacture of the passport and the passport itself are now described in further detail.

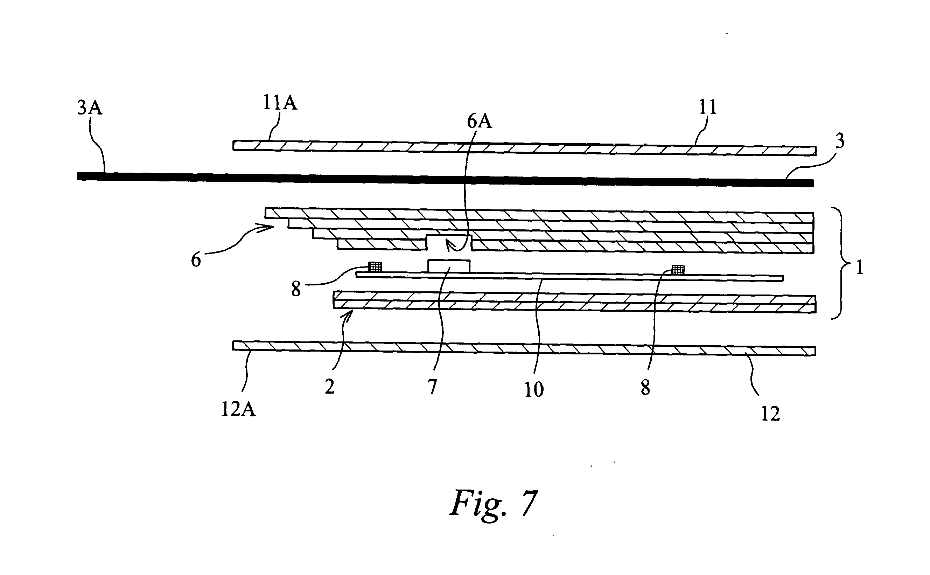

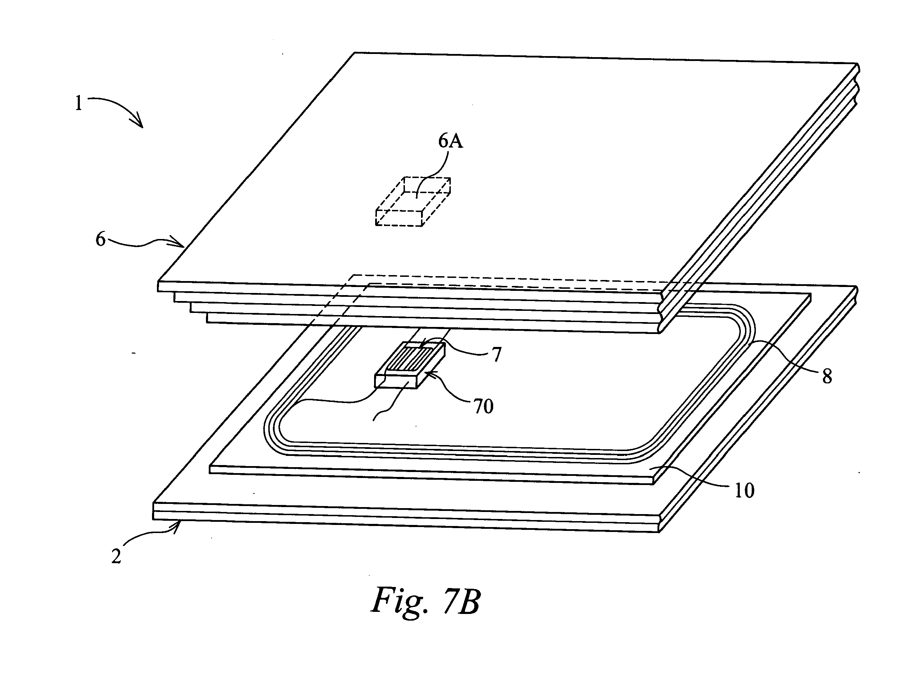

During the manufacture of the passport, a chip 7 supplied by a manufacturer has the relevant software structure loaded on to it and is attached to a sink 70 (which is shown in Figure 7B) which is in turn attached to a carrier sheet 10. The carrier sheet 10 is preferably of paper, but may be manufactured of plastics material if desired. The sink 70 provides a protective layer around the base and four side edges of the chip 7, and only the upper face of the chip (or part of this upper face) is not protected by the sink, so as not to interfere with the reading of the chip data; the sink also can act as a heat sink. The upper face of the chip is protected by an upper globe layer (not shown) which fits into a lip in the sink, thereby positioning the globe layer accurately.

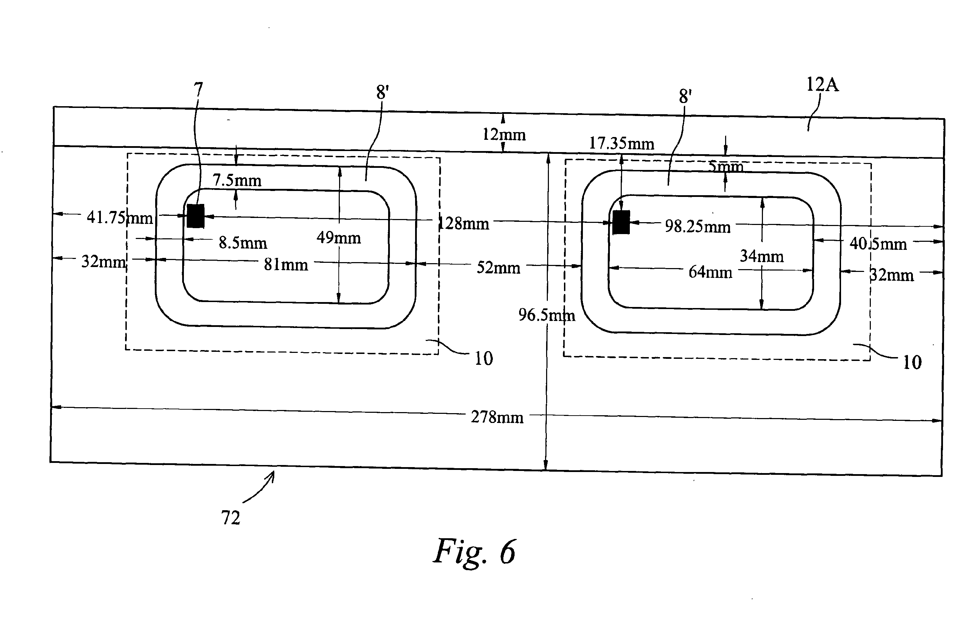

The carrier is approximately the size of the outer periphery of a loop antenna 8 (shown in Figure 7B), which is also secured to the carrier 10. As can be seen from the dimensions shown in Figure 6, each carrier 10 is about the size of a standard credit card. In other embodiments, the chip may be positioned in a different location on the carrier 10.

Reference numeral 8' in Figure 6 shows the region on the carrier 10 in which the antenna 8 is located.

Passports are conveniently manufactured in pairs, attached together in the form of a strip. For this reason, and as shown in Figure 6, in which preferred dimensions are shown, a pair of carrier sheets 10 are incorporated into a plastics laminate structure to form a sheet-like double inlay 72 which is subsequently incorporated into a pair of passports. The structure of the inlay is described in further detail below.

The double inlay 72 is severed along a line of cut between the chips when the passports are separated from each other. As an alternative, inlays may be manufactured by applying three chips to the sheet in preparation for the manufacture of three passports. The carrier sheet for 2-up passports has an overall size of 108.5mm deep and 278 mm wide, with a tolerance +/- 0.5mm, the maximum thickness of the inlay being approximately 650 microns.

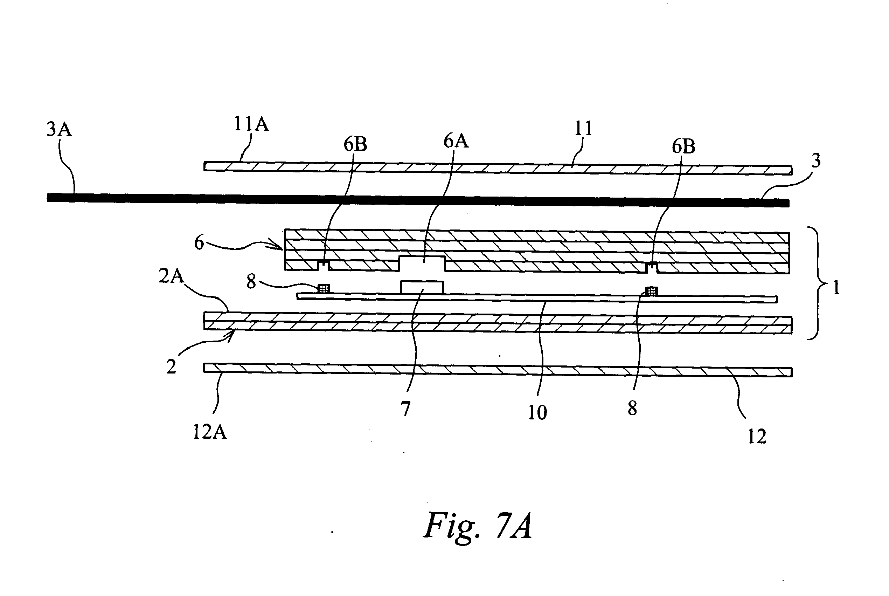

As will be described in further detail below, a further sheet 12 (shown in Figure 7) is bonded to a lower surface of the double inlay 72. This sheet incorporates a tab 12A which is bonded to the lower surface of a sheet 3 during passport assembly. The sheet 3 is the sheet onto which information relating to the passport holder is printed during personalisation.

For convenience the following description and Figures 7 - 11 show a single passport and inlay 1. However, it is to be appreciated that during production a strip incorporating a pair of passports, and a double inlay 72 are collated, assembled and stitched together before being separated.

Figure 7 is a cross-sectional, exploded view of the components of a data page of a single passport, exaggerated greatly in size for the purpose of explanation. The components of the inlay are indicated at 1. The inlay 1 comprises transparent plastics laminates 2 and 6 each made up from a plurality of layers of the same thickness. The thickness of each of the laminate sheets is approximately between 70 and 100 microns. Preferably the laminate 2 is made up from two layers and the laminate 6 from four layers, so that the laminate 2 is thinner than the laminate 6. The laminate 6 is recessed at 6A to receive the microchip 7 which is provided on the carrier sheet 10. The layer of laminate 6 closest to the carrier sheet has a cut-out extending through it so as to simplify formation of the recess 6A. The next adjacent layer has a depression or recess in it in register with the cut-out. Of course, more than one layer may be formed with a cut-out if appropriate. The cut-out(s) and depression or recess may be formed in the separate layers of the laminate 6 before the bonding of the plurality of layers, or material may be excised before or after bonding of the layers by any appropriate technique, such as etching, milling or cut-out by laser. The arrangement described above is employed in order to provide that the chip is fully embedded and fully protected within the inlay. As described above, the sink in which chip 7 is protected and via which it is mounted to the carrier sheet 10 does not extend across the upper surface of the chip, however the 2½ layers of laminate 6, as well as the covering of sheet 3 and thin top laminate 11, in conjunction with the upper globe layer, provide substantial protection over the upper face of the chip.

In addition, in one variant the laminate 6 is provided with a recess to receive the loop antenna 8 on carrier sheet 10 (as shown in Figure 7A), although in the preferred embodiment this recess is not provided given that the antenna is made from very thin copper wire. In the case where a recess for the antenna 8 is provided, this is provided in the layer of laminate 6 closest to the carrier sheet, in the form of a cut-out extending through this laminate.

It should be noted that the plastic inlay may be provided by injection moulding around the chip and cover sheet in order to seamlessly enclose the chip. However, the use of laminates to provide the inlay - as described above - is preferred, as it affords better tamper evidence. In any case, the resulting inlay is completely planar structure, without any bulge corresponding to the position of the embedded chip, antenna or carrier.

The surfaces of the laminates to be juxtaposed to the carrier sheet 10 are coated with an adhesive, and the carrier 10 is bonded between the laminates 2, 6 to form an irreversible joint. In an alternative embodiment, the adhesive is heat activated and the carrier sheet 10 is bonded to the laminates under heat and pressure.

A thin sheet 12 of plastics material (transparent or otherwise) is bonded to the lower surface of laminate 2. This thin sheet 12 incorporates a longitudinally extending tab 12A which is subsequently bonded to the sheet 3. The join between laminate 2 and sheet 12 is formed using a single layer of adhesive.

Assembly of the inlay 1, including the bonding to the inlay 1 of the thin sheet 12, is carried out as a preliminary step and is supplied to the authority charged with production of the passport itself, the authority therefore receiving an integrated inlay comprising the carrier sheet, chip and antenna wholly embedded within a plastic sheet-like layer, ready for personalisation, attachment to the data page (see below), surface lamination, and finally assembly into the passport.

In a subsequent step, the data page is produced by overlaying the laminate 6 with a sheet of material 3 on which visually legible indicia may be formed as by laser or transfer printing and overlaying it with a thin laminate 11 of transparent plastics material. Sheet 3 may be formed of any suitable material, ideally of a porous paper, and may be transparent, translucent or opaque as appropriate. In one embodiment, the sheet 3 is porous so that adhesive provided on the juxtaposed surface of the laminate 6 and/or the laminate 11 passes through the sheet 3 and bond it into place. Additionally, the sheet 3 may incorporate security features in the form of laser perforations which form distinctive patterns. Thus, the RFID chip, containing the personal data relating to the passport holder, is bonded to the rear of the data page on which the personal data is provided in printed form. In this way both printed and electronic information relating to the bearer of the passport are provided in the same physical location within the passport. In particular, in one embodiment, exactly same information is provided in both printed and electronic form. Alternatively, additional information, not provided in printed form may be provided in electronic form, for example, iris scans or fingerprint data.

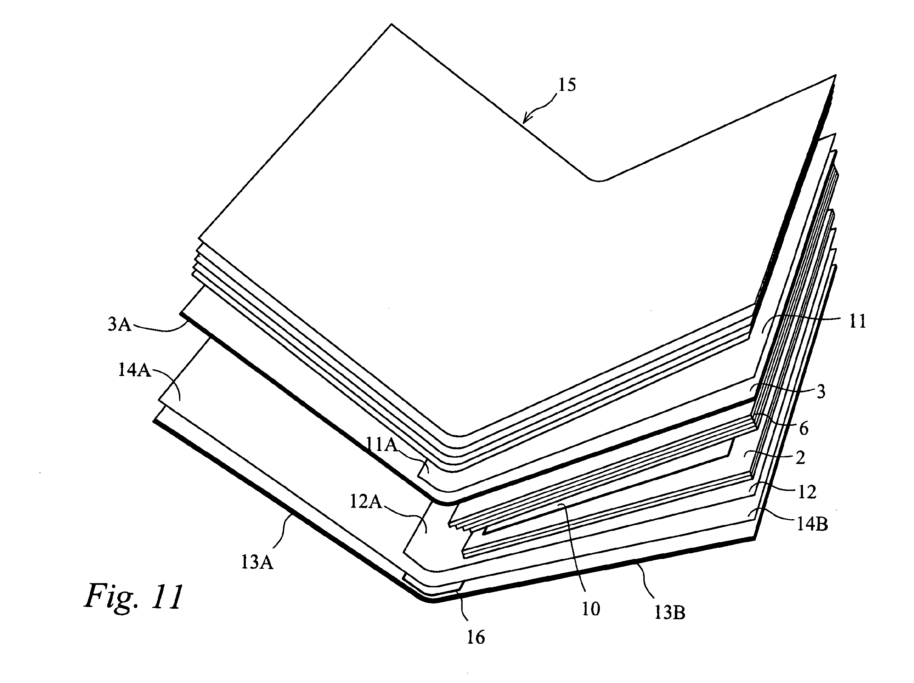

As Figure 7 illustrates, the edges of the laminates 11 and 12 are extended on a common side beyond the edge of the laminate 6 (which will extend adjacent to the passport seam) to form longitudinal tabs 11A and 12A, having a width of about 10mm. The sheet 3 is a double-sized sheet, to extend beyond the edge of the laminate 6 to form a further page 3A, and the tabs 11A and 12A are adhered to this page 3A. In this way the hinge between the bio-data page and the extension to the bio data page 3A is protected from damage (i.e. a protective hinge is formed along the fold line of sheet 3). This can most clearly be seen in Figure 11.

The surface of the laminate 6 facing towards sheet 3 is provided with a reactive coating for adhesion to a similar reactive coating on sheet 3. Similarly, a reactive coating may be applied to the undersurface of sheet 11 for adhesion to sheet 3. In an alternative embodiment, the reactive coating is only provided on the laminate 6. The reactive coating on the two relevant sheets enables those sheets to be joined together at will, conveniently at a later stage in the assembly of the passport, to enable the bio data page to be printed on before later being covered with the protective layer formed by sheet 11 and being sealed to laminate 6.

As can be seen in Figure 7 laminate sheet 6 is tapered towards one edge, being the edge to be located towards the hinge centre line of the data page. This tapering may be provided by chamfering the edge of the laminate, or may be provided as shown in Figure 7 by using layers of progressively narrower width from uppermost layer (which abuts sheet 3) to the lowermost layer (which abuts carrier sheet 10 and lower laminate 2, requiring a sufficient number of layers (in this variant 4) to achieve the requisite degree of taper. This arrangement assists in the hinging of the data page and, most importantly, provides a higher degree of tamper-resistance and tamper-evidence, without compromising the degree of protection provided by laminate 6 over the upper surface of chip 7. Any attempt to remove laminate 6 via this tapering edge of the sheet will tend to delaminate it, tearing away successive layers and passing the resulting strains to chip 7, thus resulting in serious damage to or destruction of the chip. The furthest portion of the taper extends to but not through the stitch line of the passport.

In a further version of the data page, laminate sheet 6 is not tapered, as illustrated in Figure 7A. In this case, the lower laminate layer 2 may also form a tab portion 2A which is bonded to the sheet 3.

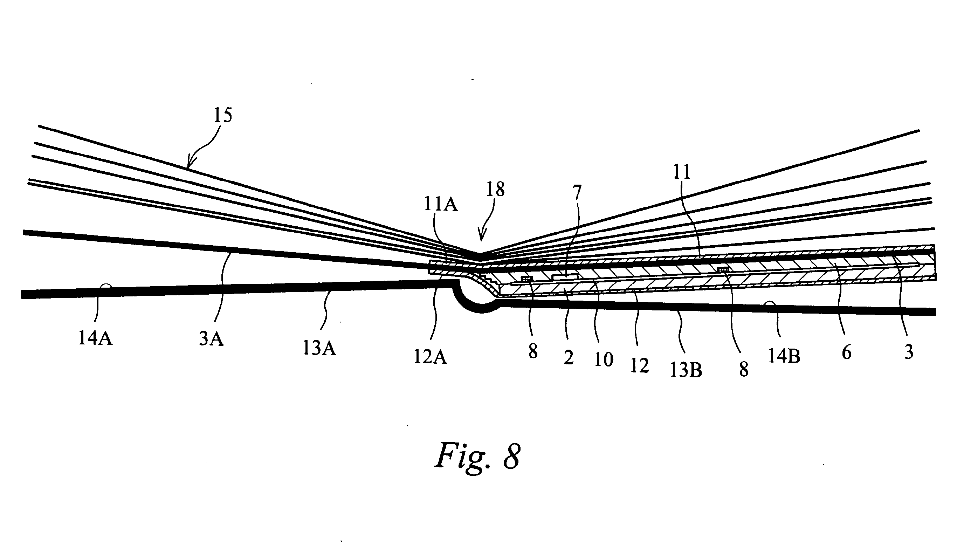

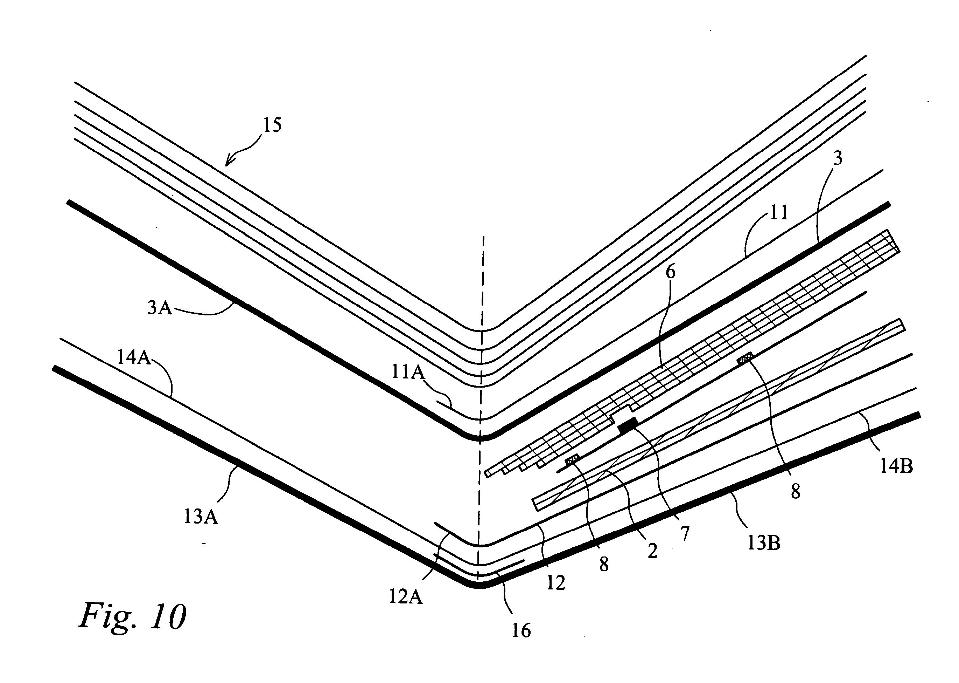

Figure 8 is diagrammatic cross-sections through a passport incorporating the components of Figure 7 taken at right angles to the spine, once again with dimensions greatly exaggerated for ease of illustration. Figure 10 is an exploded view of the passport shown in Figure 8, and Figure 11 is a perspective view of the passport shown in Figure 10. The front and back cover portions are indicated at 13A and 13B, and end papers are shown at 14A and 14B, respectively. The end papers 14A and 14B are adhered to the front and back covers 13A and 13B. The data page 3 is juxtaposed to the back cover portion 14B. The locations of the assembled components shown in Figure 8 in the finished passport are indicated using the same reference numerals as in Figure 7. The upper surface of tab 12A is adhered to the underside of the sheet 3A which is an extension of the data page as shown, and the lower surface of tab 11A is adhered to the topside of the extension sheet 3A. Pages for receiving visas and entry/exit stamps, etc, are depicted at 15, and the complete assembly is stitched through where indicated at 18 in the conventional way; between 15 and 23 visa page leaves are provided. The combined material provided by tabs 11A and 12A, together with sheet 3A, is sufficiently flexible to be folded to form the hinge of the data page. Once the data page has been bonded into the document, and the passport has been stitched along its centre line in line with the cover spine, part of sheet 3 of the data page provides a page which can be employed as a data page and part of sheet 3 (page 3A) a notes and/or declaration page, for example. It is to be noted that surface laminates 11 and 12 only extend by 10mm across page 3A, so affording high integrity of the data page without undesirably interfering with the usability of the page.

As shown in Figures 10 and 11, a linen strip 16 is provided along the spine of the passport between the cover 13 and the end paper 14. When the passport is stitched together the stitching passes through all the visa pages 15, the bio data page, the end paper 14 and the linen strip 16, but does not pass through the cover 13. Instead, the cover is subsequently adhered to the end paper 14. Thus, the stitching is not visible on the outside of the passport.

The portion of the sheet 3 forming part of the data page is provided with indicia relating in particular to the holder. The portion 3A forming a further page, which extends to the front of the passport, may be provided with information of a general nature and/or a declaration. It is to be noted that surface laminates 11 and 12 only extend by 10mm across page 3A, so affording high integrity of this page without undesirably interfering with the usability of the page.

It will be understood that the arrangement provided by the invention affords a very high level of security and tamper-resistance/tamper-evidence. The bonding between sheets 2, 6, 3, 11 and 12 is a 'one-way' process, such that delamination is impossible without obvious evidence of tampering resulting. The location of chip 7 within the layers of laminate 6 as described and illustrated provides very secure retention and protection of the chip, while providing that any attempt to delaminate the inlay or to access the chip after manufacture will result in serious damage to or destruction of the chip, so as to render the chip unreadable and useless.

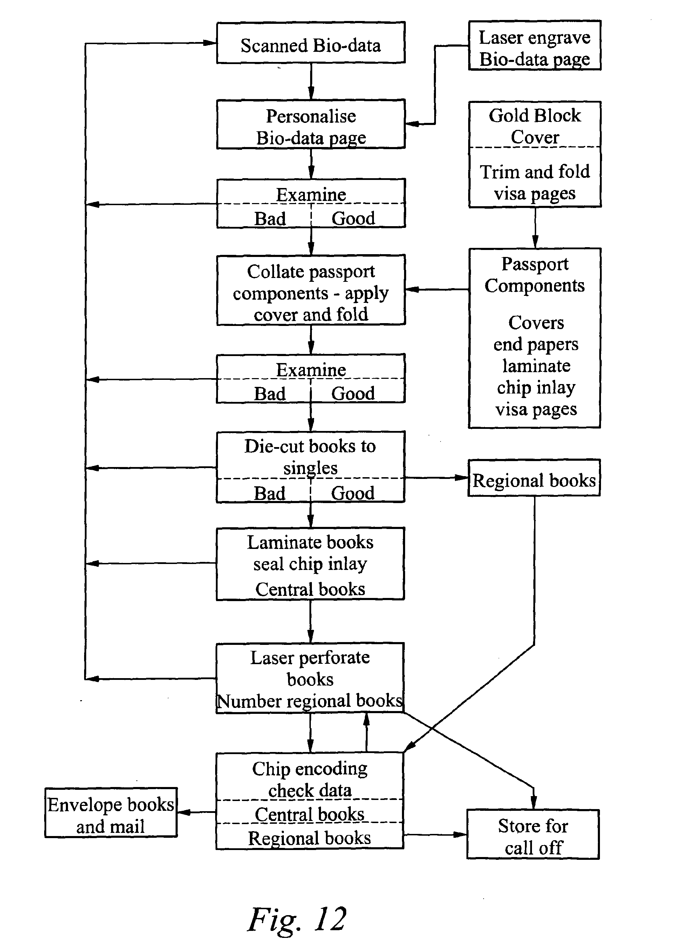

Further details relating to the manufacture and personalisation of the passport are now described with respect to Figures 12 and 13.

In particular, Figure 12 illustrates a central production process, and Figure 13 illustrates a regional production process.

As shown in Figure 12, during central production, bio-data information relating to persons for which passports are being produced is first scanned into the system. This information is then used to print a personalised bio-data page (on the one half of sheet 3) incorporating indicia relating to a particular person. The bio-data page is also laser engraved with security features.

The sheet 3 is then collated with the other components that together will form the complete passport. In particular, the linen strip 16, end paper 14, inlay 1 (incorporating the sheet 12), bio-data sheet 3, the thin laminate 11 and the visa pages 15. All these components are initially in a two-up format. These components are then stitched together prior to the cover 13 being glued on, thus protecting the stitching and providing further tamper resistance.

In one alternative, prior to stitching, the inlay 1 (incorporating the sheet 12), sheet 3, and the thin sheet 11 are collated and maintained in register during the assembly of the passport by heat sealing the inlay (via sheet 12) and sheet 11 to sheet 3 along the edges of tabs 11A and 12A. In particular, sheet 11 is sealed to sheet 3 along the entire length of the edge of tab 11A and sheet 12 is sealed to sheet 3 by applying spot welds at a number of (3 or 4) locations along the edge of tab 12A. This enables the remaining components of the passport 18, the linen strip 16, end paper 14, and visa pages 15, to be collated together without disrupting the alignment of these components.

The inlay 1, and the thin laminate 11 are then bonded to the sheet 3 using heat and pressure lamination techniques. As mentioned above, the reactive coating provided on the respective surfaces of the inlay 1 and sheet 11 reacts during lamination thereby forming a permanent bond. Since bonding only occurs after the various sheets have been stitched together, the sheets are not stuck together along the stitching line. In addition, the presence of the tapered edge of the inlay in the region of the stitching line effectively prevents sheet 12 from adhering to sheet 3 in the region of the stitching line. The completed 2-up passport is then die-cut into separate books (known as singles).

The passports are then laser perforated with the passport number and finally the chips 7 are encoded with bio-data information corresponding to the information printed on the bio-data page.

During regional production, blank books are produced using the above process. For regional production, blank bio-data pages are used to produce blank (unpersonalised) passports, but otherwise most of the same steps as above are followed. The only difference is that once the books have been die-cut they are sent out to regional facilities for regional production. Thus, the books supplied for regional production do not have personal information printed onto the bio-data page, and in addition the thin upper laminate 11 and the inlay 1 have not yet been bonded to the sheet 3. This is because lamination only occurs after information has been printed to the bio-data page.

During regional production, as shown in figure 13, bio-data information for a particular person is downloaded to a laser printer and printed onto a transfer sheet. The bio-data information is then transferred to the bio-data page using a transfer unit.

The inlay 1 and thin laminate 11 are then bonded to the sheet 3 using heat and pressure lamination techniques, as above.

The chip 7 is then encoded with corresponding personal information.

During the encoding of personal information on to the chip 7 essentially all details printed on the bio data page are stored on the chip 7. In particular, the name, age, date of birth, and other personal information are stored on the chip 7. In addition, a JPEG file containing an image of the passport holder is also stored on the chip. The data stored on the chip is then signed so as to enable its authenticity to be verified when the chip is subsequently read, for example, when the bearer of the passport passes through border control.

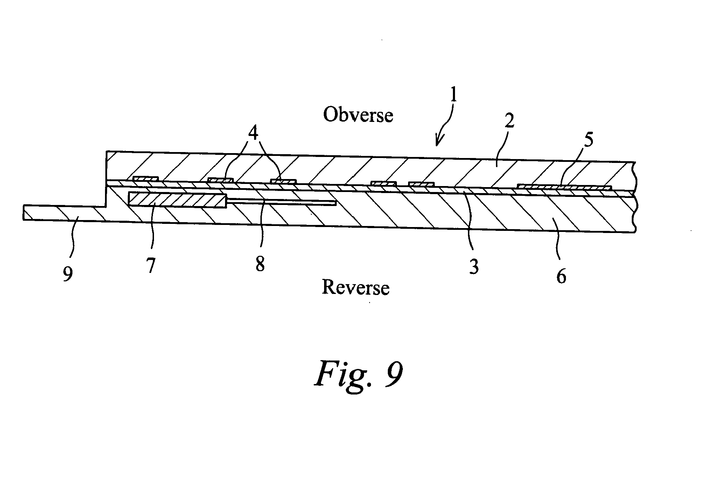

Figure 9 shows a further embodiment in accordance with the invention in the form of a page, 1, of a document such as a passport, or alternatively an identification document such as a driving licence or identification card.

The obverse face, that is the side of the page 1 to be viewed by a person visually inspecting the page is uppermost, the reverse face being lowermost.

From the obverse (upper) face of the page 1, the page comprises a multi-layer laminated structure, comprising a cover layer 2, of a transparent clear (pigment free) synthetic plastics material covering a sheet 3 of an easily damaged material, in this particular case a security paper. The sheet 3 carries markings 4 such as lettering and an extended image 5, which may be laser, printed for example onto the sheet. As the sheet 3 is a low quality rather porous and loosely fibred paper, there will also be some penetration of toner into the fibrous structure of the paper.

Underlying the sheet 3 is a substrate 6 of a transparent (clear, unpigmented) synthetic plastics material in which is embedded and encapsulated a radio-frequency microchip 7 and its antenna loop 8. The antenna loop 8 may have a unique or unusual layout and visual appearance.

The microchip module 7 may be 3 - 5 mm square, with a loop antenna for operation in the radio spectrum region. The substrate 6 is itself about 0.35 - 0.45 mm in thickness, typically 0.40 mm, which is sufficient to embed the chip and antenna when laid flat in the substrate. The substrate 6 may be formed with a reduced thickness edge tab 9 which extends beyond the edge of the substrate 6 and superposed sheet 3 and cover layer 2 to provide a hinge should the page be required to be bound into a document booklet, such as a passport or other identification or validation document.

The sheet 3 is advantageously printed on its obverse face (towards the top in the drawing) with relevant details concerning the document holder, of the kind often referred to as the "bio data" and will include a digitised image derived from a photograph or a live captured image, printed on the sheet 3, name, place and date of birth, identifying serial numbers, and possibly other material. Any attempt at tampering with this page will involve delaminating the cover layer 2, and then attempting to erase and alter the data and will, because of the easily damaged paper used, cause visible damage to the paper (even if the cover can be adequately re-laminated).

The microchip 7, embedded in the substrate 6, can only be accessed for removal or replacement by splitting or cutting into the substrate, again causing visible damage to the substrate. The microchip 7 will usually have encoded therein bio-data similar to that appearing on the visual data sheet 3, acting as a confirmation of the visual data for machine assisted identity confirmation.

If it were possible to replace the visual sheet 3 and the chip 7 was not changed then the discrepancy in the data would signal tampering, whilst absence of the chip would also be evidenced by a failure to read the data by the receiving terminal.

However, attempts to tamper with either or both of the sheet 3 and chip 7 would result in clearly visible damage to the page itself, and to the substrate, so that attempted tampering can be easily detected by a visual inspection.

The plastics material used for the cover layer 2 and the substrate 6 may be a polymer material such as polyester, poly vinyl chloride (PVC) and the like, and the laminates shown in Figure 7 may be similarly formed. For instance, the substrate is a transparent composite of polyester and polyethylene.

In summary, the preferred embodiments relate to an authentication or validation document having independently one, some, any or all of the following features:
- A tapered sheet (preferably a laminate), preferably tapering to the hinge line of the passport to assist the folding of the book and prevent "gaping" of the book when closed. The tapering also preferably reduces the possibility of tampering by affording only a narrow edge to be worked away.
- A recess for the chip, so that it does not project out of the laminate. The recess may be formed by one or more holes or cavities in the sheets of the laminate, and may be backed by more such sheets, for protection. The taper may be achieved by stepping down the width of the same several layers of laminate.
- Laminated plastics protection on both sides of the chip/antenna/carrier sub-structure.
- A bio data page adhered to one of the plastics laminates and itself protected by a further, relatively thin plastics sheet.
- The bio data page extends as a further, unprotected page on the other side of the passport.
- A further relatively thin plastics sheet adhered to the other of the plastics laminates, for further protection.
- The two relatively thin plastics sheets extend past the passport hinge point to constitute hinge tabs that are preferably adhered to each side of the bio data page to protect the hinge point.
- The bio data page can be attached at will to the inlay via a reactive coating on the relevant one of the laminates and of the relatively thin plastics sheets, that permeates through the bio data page. Such an attachment process can ensure that the bio data page cannot be removed intact from the rest of the passport.
- A page for an authentication or validation document in which the same authentication or validation data is provided in both printed and electronic form. In this way all authentication information is located in the same physical location within the passport which provides added security and resistance to tampering.

It is of course to be understood that the invention is not intended to be restricted to the details of the above embodiments which are described by way of example only.

It will be understood that the present invention has been described above purely by way of example, and modifications of detail can be made within the scope of the invention.

Each feature disclosed in the description, and (where appropriate) the claims and drawings may be provided independently or in any appropriate combination.

## Claims

1. A method of producing an authentication or validation document, which comprises adhering an inlay containing an RFID microchip to a page of the document.

2. A method according to Claim 1, wherein visually legible data is printed onto the page, the data constituting personal information relating to the bearer of the document.

3. A method according to Claim 1 or 2, wherein the inlay is adhered to the page after printing onto the page.

4. A method according to Claim 2 or 3, wherein the inlay is adhered to the underside of the surface onto which the page is printed.

5. A method according to any of the preceding claims, wherein data constituting personal information relating to the bearer of the document is stored on the microchip, and preferably wherein at least some of (preferably substantially all) the information that is stored on the microchip is also printed onto the page, and more preferably wherein exactly the same information that is stored on the microchip is also printed on the page, and preferably wherein additional information that is not printed onto the page is stored on the chip.

6. A method according to any of the preceding claims, wherein a reactive coating is provided on the surface of the inlay which enables the inlay to be adhered to the page in a subsequent processing step.

7. A method according to any of the preceding claims, wherein the inlay is secured to the document along an edge thereof prior to being adhered to substantially the entire surface of the page.

8. A method according to Claim 7, wherein the inlay is secured to the document along an edge of the page adjacent to a nominal binding line of the document.

9. A method according to Claim 7 or 8, wherein the inlay is secured to the document via a hinge tab provided along an edge thereof, and preferably wherein the page extends past a nominal binding line of the document thereby forming a further page on the other side of the binding line, and wherein the hinge tab is secured to this further page.

10. A method according to any of the preceding claims, wherein a protective layer is adhered to a surface of the page onto which visual data is printed, and preferably wherein the protective layer is secured to the document along an edge thereof prior to adhering the protective layer to substantially the entire surface of the page.

11. A method according to Claim 10, wherein the protective layer is secured to the document along an edge of the page adjacent to a nominal binding line of the document.

12. A method according to Claim 10 or 11, wherein the protective layer is secured to the document via a hinge tab provided along an edge thereof.

13. A method according to Claim 12, wherein the page extends past a nominal binding line of the document thereby forming a further page on the other side of the binding line, and wherein the hinge tab is secured to this further page.

14. A method according to any of Claims 10 to 13, wherein the protective layer and the inlay are both adhered to the page during the same adhering step.

15. A method according to Claim 14, wherein the adhering step comprises laminating the inlay and the protective layer to the page.
